# EUROPÄISCHE PATENTSCHRIFT

(11) **EP 0 332 609 B1**
(45) Veröffentlichungstag und Bekanntmachung des Hinweises auf die Patenterteilung: **20.07.1994**
(21) Anmeldenummer: 89890070.9
(22) Anmeldetag: 10.03.1989
(51) Int. Cl.: F01N 3/02, B03C 1/30, B01D 35/06

(54) **Dieselabgasfilter**
Filter for diesel exhaust gas
Filtre de gaz d'échappement de diesel

(30) Priorität: 11.03.1988 AT 671/88; 30.11.1988 AT 2947/88
(43) Veröffentlichungstag der Anmeldung: 13.09.1989
(73) Patentinhaber: Fleck, Carl Maria, Dr., 2391 Kaltenleutgeben (AT)
(72) Erfinder: Fleck, Carl Maria, Dr., 2391 Kaltenleutgeben (AT)
(74) Vertreter: Kliment, Peter, Dipl.-Ing.

(56) Entgegenhaltungen:
- EP-A- 0 212 396
- WO-A-85/00408
- DE-A- 3 324 886
- DE-A- 3 529 684
- DE-A- 3 622 623
- DE-A- 3 723 544
- GB-A- 2 064 361
- US-A- 4 662 911

## Beschreibung

Die Erfindung bezieht sich auf ein Dieselabgasfilter zur Ablagerung von Rußpartikeln aus Dieselabgasen auf Ablageflächen und Verbrennung der abgelagerten Rußpartikel, wobei zum Aufbau eines elektrischen Feldes quer zur Strömungsrichtung der Abgase Hochspannungselektroden angeordnet sind.

Durch die DE-OS 38 04 779 wurde eine Einrichtung bekannt, bei der in einer rohrförmigen Elektrode, die an Masse liegt, eine zentral angeordnete weitere Elektrode vorgesehen ist, die an einer Hochspannung liegt. Dabei sind in dem Zwischenraum zwischen den beiden Elektroden weitere, Elektroden angeordnet, die durch einen Wickel aus zwei voneinander isolierten Lagen von elektrisch leitenden Folien gebildet sind. An diesen beiden elektrisch leitenden Lagen des Wickels liegt eine Niederspannung an, wobei sich die Rußpartikel zwischen den Lagen des Wickels ablagern.

Das Verbrennen der Rußschicht erfolgt durch die Zufuhr von ohm'scher Wärme, sobald es aufgrund der Ablagerung der Rußpartikel an den Lagen des Wickels zu einer direkten Kontaktgabe zwischen den beiden Lagen des Wickels über die Rußschicht kommt. Dabei ergibt sich jedoch der Nachteil, daß es dabei beim Abbrennen der Rußschicht zu Lichtbogenentladungen und damit zu einer örtlich sehr hohen thermischen Belastung der Elektroden und auch zu einer entsprechenden Materialwanderung kommt. Diese führt zu einem starken Aufrauhen der Oberfläche der Elektroden und zur Ausbildung von Spitzenentladungen, die zu einem erhöhten Leistungsbedarf führen.

Weitere aus dem Stand der Technik bekannten Konzepte für die Verbrennung der in den Dieselabgasen enthaltenen Rußpartikel arbeiten mit einer Abscheidung dieser Partikel an einem Filter und deren nachträgliche Verbrennung. Ein Konzept sieht herkömmliche Elektrofilter mit ringförmigen Elektroden vor, die im Durchbruchsbereich arbeiten und zur Bildung von entsprechend großen agglomerierten Rußpartikel führen. Diese werden in einem nachgeschalteten Zentrifugalabscheider abgeschieden und mit einem Teilstrom des Abgases in den Ansaugtakt der Brennkraftmaschine zurückgeführt. Es hat sich aber herausgestellt, daß diese Rußpartikel einen erhöhten Abrieb von Kolben und Zylinderbuchse hervorrufen, der von den Autoherstellern nicht akzeptiert werden kann. Ein anderes Konzept sieht Waben- oder Zellenfilter vor, die aus aneinanderliegenden langen Filterzellen bestehen, die vorzugsweise einen quadratischen Querschnitt besitzen und abwechselnd an der Eintrittsseite und an der Austrittsseite durch einen Pfropfen verschlossen sind. Die zu filternden Abgase können durch die zwei solchen Filterzellen gemeinsame poröse Wand hindurchtreten, während die Aerosole durch die Poren nicht hindurchkönnen und in jener Zelle abgelagert werden, die eingangsseitig offen ist. Diese Filter sind aus hochtemperaturfestem Keramikmaterial hergestellt und vorzugsweise mit katalytischen Substanzen beschichtet oder gedopt, sodaß es bei Sauerstoffüberschuß bereits unter 700°C zu einer Verbrennung der abgeschiedenen Rußpartikel kommt. Da diese Temperaturen nur bei Vollgasbetrieb erreicht werden, kommt es in den Perioden dazwischen zu einem erheblichen Aufbau von Gegendruck, der die Motorleistung in unangenehmer Weise reduziert. Dazu kommt eine bleibende Verlegung der Poren durch nicht brennbare metallische Verunreinigungen der Rußpartikel, sodaß es langfristig zu einem irreversiblen Aufbau von Gegendruck am Abgasfilter kommt. Darüberhinaus ergibt sich eine strukturelle Erschöpfung der ausgangsseitigen Abschlußstopfen mit der Einsatzzeit, die zu einer wachsenden Undichtheit des Filters nach längeren Einsatzzeiten führt.

Ziel der Erfindung ist es, diese Nachteile zu vermeiden und ein Dieselabgasfilter der eingangs erwähnten Art vorzuschlagen, bei dem ein Verbrennen der abgeschiedenen Rußpartikel ohne einer Lichtbogenentwicklung sichergestellt ist und bei dem es auch zu keinem Verstopfen des Filters kommt.

Erfindungsgemäß wird bei einem Dieselabgasfilter der eingangs erwähnten Art vorgeschlagen, daß das Filter einen aufheizbaren Keramikkörper aus einem Material mit hohem spezifischen elektrischen Widerstand aufweist, daß der Keramikkörper von parallel zueinander verlaufenden Kanälen durchsetzt ist, die an beiden Seiten offen sind und von den Abgasen durchströmt sind und daß die Wände dieser Kanäle die Ablageflächen für die Rußpartikel bilden, wobei dem Keramikkörper unter Ausnutzung der geringen elektrischen Leitfähigkeit durch die an den Hochspannungselektroden angelegte Spannung ohm'sche Wärme zugeführt wird.

Durch diese Maßnahmen ergibt sich der Vorteil, daß keine separaten Einrichtungen erforderlich sind, um die Zufuhr von Wärme zu ermöglichen, die zum Abbrennen des an den Wänden der Kanäle des Keramikkörpers abgelagerten Rußes dient.

Die Regelung der Arbeitstemperatur des durch den Keramikkörper gebildeten Filters kann sowohl über die Strom-Spannungskennlinie selbst, als auch mit Temperaturfühler durchgeführt werden, die in der Keramik oder im Gasstrom nach der Keramik angeordnet sind. Insbesondere wird durch eine Regelung der das elektrische Feld und den ohm'schen Strom aufbauenden Hochspannung erreicht, daß die Arbeitstemperatur des Abgasfilters während des Abscheidevorganges in einen Bereich gebracht werden kann, der eine Verbrennung der abgeschiedenen Rußpartikel während des Abscheidevorganges ermöglicht und daß diese Temperatur auch über der Eintrittstemperatur der Abgase in den Filter gehalten werden kann.

Nach einem weiteren Merkmal der Erfindung kann vorgesehen sein, daß der Keramikkörper zwischen zueinander parallelen Plattenelektroden angeordnet ist und zwischen diesen Plattenelektroden eine entsprechend hohe elektrische Spannung liegt, wobei die Elektroden von dem Keramikmaterial des Keramikkörpers umhüllt sind oder aus leitfähigem keramischen Material bestehen oder durch elektrisch leitende Drähte, Bändern oder Stifte gebildet sind, die in einige am Rand des Keramikkörpers befindliche Kanäle eingeschoben sind, wobei jene Kanäle, in denen elektrisch leitende Drähte, Bänder oder Stifte eingeschoben sind, einseitig verschlossen sind.

Auf diese Weise ergeben sich in konstruktiver Hinsicht sehr einfache Lösungen für die Anordnung von Elektroden.

Dabei kann nach einem weiteren Merkmal der Erfindung vorgesehen sein, daß die Hochspannungselektrode kreisförmig oder ellipsenförmig in sich geschlossen ist und außen von einem entsprechend geformten, im wesentlichen kreisringförmigen Keramikkörper umgeben ist, der von einer außen angeordneten auf Masse liegenden zweiten Elektrode, die gegebenenfalls mit einer Wärmedämmung umhüllt ist, umgeben ist.

Dadurch ergeben sich besonders günstige Verhältnisse Weiters kann vorgesehen sein, daß die im wesentlichen rechteckige Querschnittsform eines jeden Kanals des Keramikkörpers quer zum elektrischen Feld und quer zur Strömungsrichtung eine Breite aufweist, die größer ist, als die quer zur Strömungsrichtung und in Richtung des elektrischen Feldes verlaufende Höhe des Kanals, wobei das Verhältnis der Breite zur Höhe der einzelnen Kanäle zwischen 3:1 und 6:1 liegt und die in Richtung des elektrischen Feldes bzw. in Abscheiderichtung verlaufenden Stege schmal ausgebildet sind und eine Breite von weniger als 0,5mm aufweisen.

Durch die breiten und niedrigen wabenartig angeordneten Kanäle im Keramikkörper wird in diesen eine weitgehend laminare Strömung erreicht und dadurch optimale Bedingungen für das Abscheiden der Rußpartikel aus dem Gasstrom sichergestellt, wobei durch die schmalen Stege der Widerstand des Keramikkörpers sehr hoch gehalten werden kann, wodurch sich im Inneren des Keramikkörpers ein entsprechend starkes elektrisches Feld ausbilden kann.

Um den Widerstand des Keramikkörpers weiter steigern zu können, kann vorgesehen sein, daß die in Feldrichtung liegenden Stege in übereinanderliegenden Ebenen jeweils versetzt angeordnet sind, so daß der Querschnitt durch den Keramikkörper normal zur Strömungsrichtung der Abgase der Struktur einer Ziegelmauer ähnlich sieht.

Nach einem weiteren Merkmal der Erfindung kann vorgesehen sein, daß dem Keramikkörper eine Entladungsstrecke vorgeschaltet ist, die aus, vorzugsweise parallel zueinander liegenden drahtförmigen Entladungselektroden und stromauf zu diesen liegenden zylinderförmigen Gegenelektroden oder Gegenelektroden besteht, deren den drahtförmigen Entladungselektroden gegenüberliegende Kanten parallel zu den Entladungselektroden ausgerichtet sind, wobei die Spannung an dieser Entladungsstrecke regelbar ist.

Dabei kann nach einem weiteren Merkmal der Erfindung vorgesehen sein, daß der Ionisationsstrom der durch die Elektroden und die Gegenelektroden gebildeten Entladungsstrecke proportional zu der Einspritzmenge des Dieselkraftstoffes oder einer ihr verwandten Größe geregelt wird.

Obwohl kurz nach der Verbrennung des Brennstoff-Luftgemisches in einer Brennkraftmaschine die meisten Rußteilchen aufgeladen sind, erhöht sich der Abscheidegrad wesentlich, wenn die Rußpartikel vor dem Keramikkörper durch eine Gasentladung elektrisch aufgeladen werden. Durch diese meist mehrfache Aufladung und die Tatsache, daß in den engen Kanälen des Keramikkörpers eine kräftige Strömung herrscht, ergibt sich ein von der Strömungsgeschwindigkeit schwach abhängiger Abscheidegrad. Die rauhe Oberflächenbeschaffenheit des Keramikmaterials erhöht sowohl die Dicke der Grenzschichte als auch die Haltekräfte der abgeschiedenen Rußpartikel wesentlich. Trotzdem sollte die Verbrennung kontinuierlich oder zumindest in kleineren zeitlichen Intervallen stattfinden, um diese Haltekräfte nicht zu überschreiten. Die für eine kontinuierliche Verbrennung benötigte hohe Heizleistung wird durch die sehr kompakte Wabenstruktur des Keramikkörpers verringert und kann durch eine absichtliche Erhöhung des Rußausstoßes weiter herabgesetzt werden. Trotzdem können die Intervalle deutlich verlängert werden, wenn besondere Maßnahmen zur weiteren Erhöhung der Oberflächenrauhigkeit, vorzugsweise bei der Herstellung der Keramikfilter, ergriffen werden.

Da zur Abscheidung ein elektrisches Feld verwendet wird, muß das keramische Material einen entsprechend hohen spezifischen Widerstand haben. In diesem Fall muß darauf Bedacht genommen werden, daß das elektrische Feld im Inneren des Keramikkörpers durch elektrische Polarisation des Dielektrikums erzielt wird. Es ergibt sich dann eine teilweise Kompensation der dielektrischen Oberflächenladung durch das abgeschiedene geladene Aerosol und das außen angelegte Feld und/oder die Aufladung des Aerosols muß umgepolt werden. Dies ist erforderlich, damit es zu einer Aufrechterhaltung oder Wiederherstellung eines entsprechenden Feldes kommt und/oder die abgeschiedene Ladung kompensiert wird. Die notwendige Frequenz der Umpolung ergibt sich aus der Konzentration und der durchschnittlichen Ladungszahl der Rußteilchen und den dielektrischen Eigenschaften des Werkstoffes.

Bei Sättigung der dielektrischen Oberflächenladung kann auch das äußere Feld ausgeschaltet werden. Dadurch werden die abgeschiedenen Ladungen wieder wirksam und können für eine Zeit durch das von ihnen verursachte Feld eine weitere Abscheidung hervorrufen.

Noch besser arbeitet diese Methode, wenn innerhalb einer Polaritätsperiode an den Abscheideflächen des Keramikkörpers die Polarität der Gasentladung und damit die Aerosolladung ihr Vorzeichen wechselt.

Dies ist durch Spannungsumkehr an der Entladungsstrecke leicht möglich, insbesondere wenn die Entladungsstrecke aus Entladungsdrähten und zylinderförmigen Gegenelektroden besteht. Besonders vorteilhaft ist dann die Anordnung der Gegenelektroden strömungsaufwärts von den Entladungselektroden, da dann die aufgeladenen Rußteilchen durch ihre geringe Beweglichkeit im Gasstrom dem Filter zugeführt werden und nicht die Gegenelektroden erreichen können. Die Entladungsdrähte können zur Reinigung von Zeit zu Zeit abgebrannt werden, wenn sie auf Erdpotential und die Gegenelektroden auf der jeweiligen positiven oder negativen Hochspannung liegen.

Nach einem weiteren Merkmal der Erfindung kann vorgesehen sein, daß eine Einrichtung zur Regelung der zugeführten Heizleistung vorgesehen ist, wobei die Regelung in Abhängigkeit von gleichzeitigen Messungen der temperaturabhängigen Strom-Spannungs-Charakteristik des Keramikkörpers in Abscheiderichtung oder von der mittels eines Temperaturfühlers an dem Keramikkörper erfaßten Temperatur erfolgt.

Dadurch ist eine in konstruktiver Hinsicht sehr einfach aufgebauten Einrichtung zur Regelung der zugeführten Heizleistung möglich.

Weiters kann auch vorgesehen sein, daß eine Einrichtung zur Regelung der zugeführten Heizleistung vorgesehen ist, wobei die Regelung in Abhängigkeit vom Beladungsgrad des Filters ist, der durch Messung des Durchgangswiderstandes quer zur Abscheiderichtung oder durch Vergleich der Durchgangswiderstände in der Abscheiderichtung und quer dazu bestimmt wird.

Auch bei dieser Variante ergibt sich der Vorteil einer in konstruktiver Hinsicht sehr einfachen Lösung.

Im folgenden werden erfindungsgemäße Ausführungen des Dieselabgasfilters unter Bezugnahme auf die beigeschlossenen Zeichnungen beschrieben.

Im folgenden werden erfindungsgemäße Ausführungen des Dieselabgasfilters unter Bezugnahme auf die beigeschlossenen Zeichnungen beschrieben.

In den Zeichnungen zeigt:
- Fig. 1a: das Schema eines herkömmlichen Wabenfilters,
- Fig. 1b: das Schema des erfindungsgemäßen Dieselabgasfilters,
- Fig. 2a: Längs- und Querschnitt durch einen Dieselabgasfilter mit magnetischer Abscheidung und Induktionsheizung,
- Fig. 2b: Längs- und Querschnitt durch einen Dieselabgasfilter mit elektrischer Abscheidung und ohmscher Widerstandsheizung,
- Fig.3: die Heizleistung und das Abscheideverhalten der Anordnung nach Fig. 2b als Funktion der Hochspannung,
- Fig.4: Kennlinien der Heizleistung, einen Regelzyklus bei 700°C mit 3,6 kW Heizleistung und einen Regelzyklus bei 800°C mit 4,1 kW Heizleistung bei gleichzeitiger Abscheidung, und
- Fig.5: den Längsschnitt durch eine kreisringzylinderförmige Anordnung des Wabenfilters.

Fig. 1a zeigt einen schematischen Längsschnitt durch einen Wabenfilter, wie er in Verbindung mit dieselgetriebenen Personenkraftwagen bereits im Einsatz war. Die Kanäle aus porösem dünnen Keramikmaterial 1 besitzen meist einen quadratischen Querschnitt und sind wechselseitig am Eingang oder am Ausgang mit Stopfen verschlossen, so daß die einströmenden Verbrennungsabgase 3 gezwungen werden, die porösen Keramikwände zum nächsten ausgangsseitig offenen Kanal zu durchdringen. Die Rußteilchen werden dabei an den feinporigen Keramikwänden des eingangsseitig offenen Kanals abgelagert und die von Rußpartikel befreiten Gase 4 verlassen den Wabenfilter.

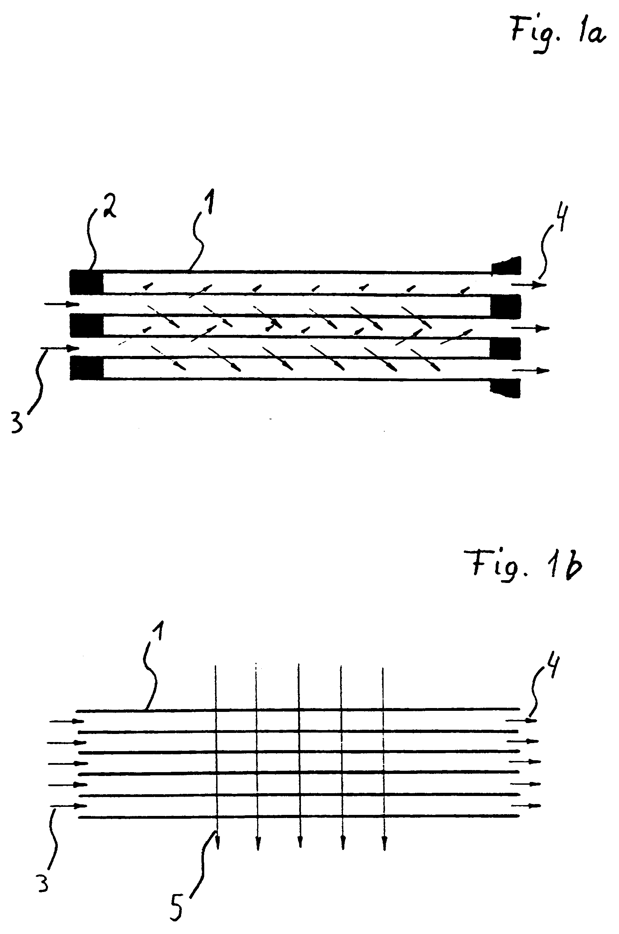

Fig. 1b zeigt einen schematischen Längsschnitt durch einen erfindungsgemäßen Dieselabgasfilter. Die Strömungskanäle sind beidseitig offen und die Abgase können frei hindurch strömen. Nur die elektrisch aufgeladenen Rußteilchen bewegen sich unter dem Einfluß der Feldlinien 5 auf die Wände 1 der Strömungskanäle zu und werden an ihnen abgeschieden. Im Magnetfeld wirkt die abscheidende Kraft normal auf die Strömungsrichtung und normal auf die Feldlinien 5, also normal auf die Zeichenebene. Im elektrischen Feld wirkt die Kraft längs der Feldlinien 5, also in der Zeichenebene. Unter der in beiden Fällen normal zur Strömungsrichtung wirkenden Kraft driften die Rußteilchen in einer Resultierenden aus Driftgeschwindigkeit und lokaler Strömungsgeschwindigkeit gegen die Wand.

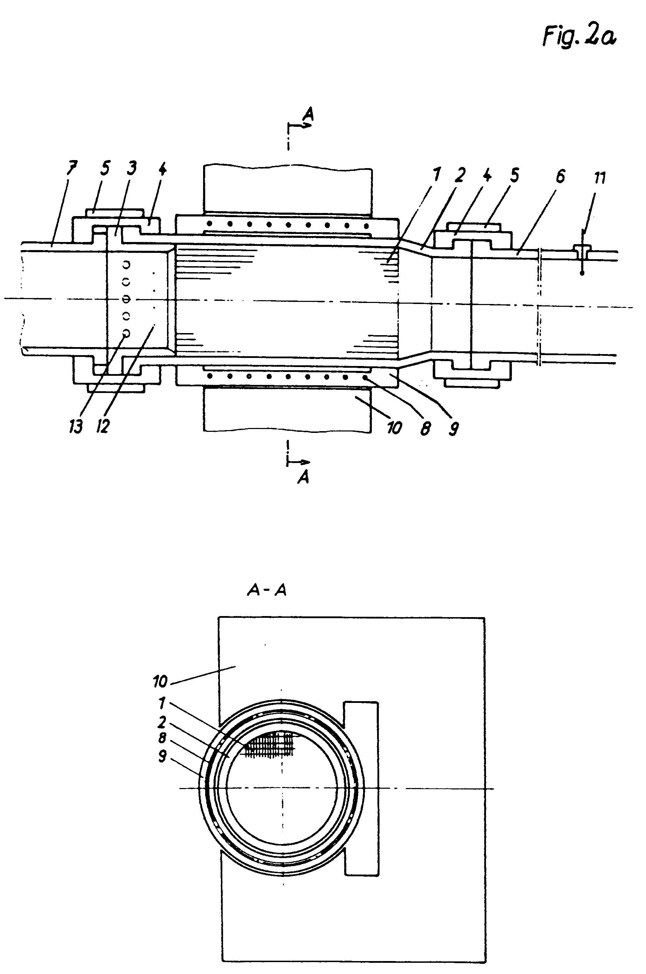

Fig. 2a zeigt einen Dieselabgasfilter 1 im Schnitt, der sich in einer Keramikhülse 2 befindet und mit einem Distanzring 3 fixiert wird. Dieser Distanzring dient auch gleichzeitig als Aufnahme der Gasentladungsstrecke, die aus Entladungsdrähten 12 und zylinderförmigen Gegenelektroden 13 besteht. Die Keramikhülse 2 ist ihrerseits über geteilte Keramikmuffen 4 und Spannringe 5 an die Abgasanlage 6 bzw. die Abgaskrümmer 7 angeflanscht. Die Abgaskrümmer 7 sind vorzugsweise aus Keramik oder Teilkeramik, um den Wabenfilter auf möglichst hoher Temperatur zu halten und weniger Heizleistung aus der Induktionsheizung zu beziehen, deren Wicklungen 8 ebenfalls in Keramik 9 eingebettet sind. Darüber wird der Stationärmagnet 10 von der Abgasseite 6 her über die Keramikmuffen 4 und die Spannringe 5 auf die Keramikfassung 9 der Induktionswicklungen 8 aufgeschoben. Im Falle einer instationären Verbrennung des abgeschiedenen Rußes wird die Leistung der Induktionsheizung durch einen Temperaturfühler 11 geregelt, der die Austrittstemperatur der Abgase aus dem Wabenfilter mißt und den Wabenfilter bzw. den abgeschiedenen Ruß auf einer konstanten Temperatur hält, bei der die katalytische Verbrennung ablaufen kann. Bei einer kontinuierlichen Verbrennung braucht man nicht notwendigerweise eine Regelung, wenn man davon ausgeht, daß durch die Induktionsheizung nur elektrisch leitende Stoffe erhitzt werden, da dies in unserem Falle nur der Ruß ist und nach seiner Verbrennung eben keine leitenden Substanzen mehr im Filter vorhanden sind.

Für hohe Abscheidegrade ist vor dem Wabenfilter 1 eine Gasentladungsstrecke vorgesehen, deren Entladungsdrähte 12 zueinander und zu den zylinderförmigen Gegenelektroden 13 parallel ausgerichtet sind. Ohne Gasentladungsstrecke beträgt der Abscheidegrad je nach Ausführung und Arbeitsweise des Filters etwa 50 % bis 70 %, mit einer Gasentladungsstrecke etwa 90 % bis 98 %.

Der Querschnitt dieser Vorrichtung in Höhe des Wabenfilters 1 zeigt die Induktionsheizung 8, 9 und den Stationärmagneten 10, dessen Polschuhe der Krümmung des Keramikbettes 9 der Induktionswicklungen 8 angepaßt sind.

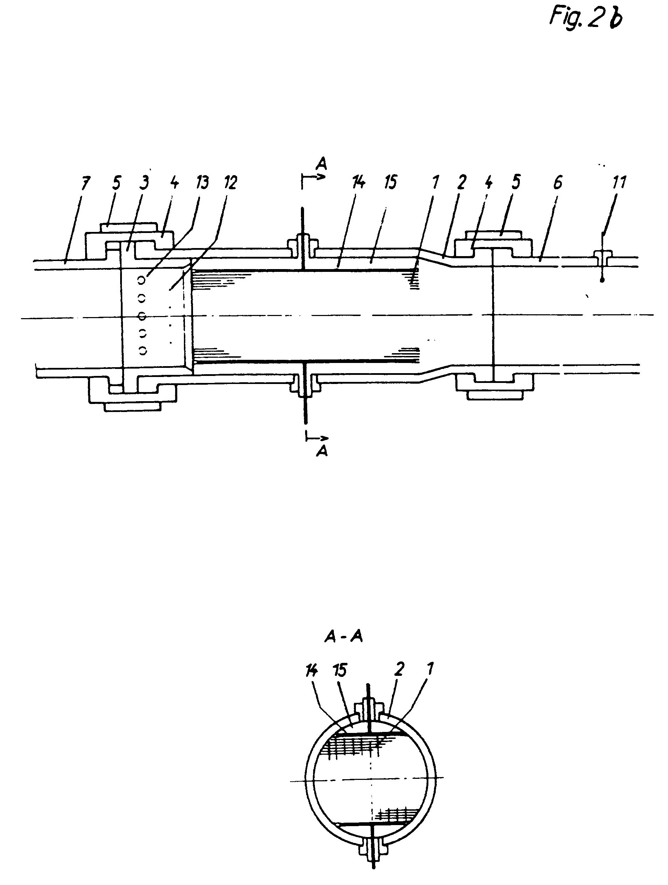

Fig.2b zeigt Längs- und Querschnitt durch einen Wabenfilter mit elektrischer Abscheidung und ohmscher Widerstandsheizung. Der Wabenfilter 1 ist an zwei zueinander und zur Zylinderachse parallelen Seiten abgeschnitten und an diesen Seiten sind zwei Elektroden 14 angeordnet. In dem Rest des abgeschnittenen Teiles wird die Strömung durch zwei keramische Formteile 15 unterbunden. Alle übrigen konstruktiven Details sind mit Fig. 1 identisch.

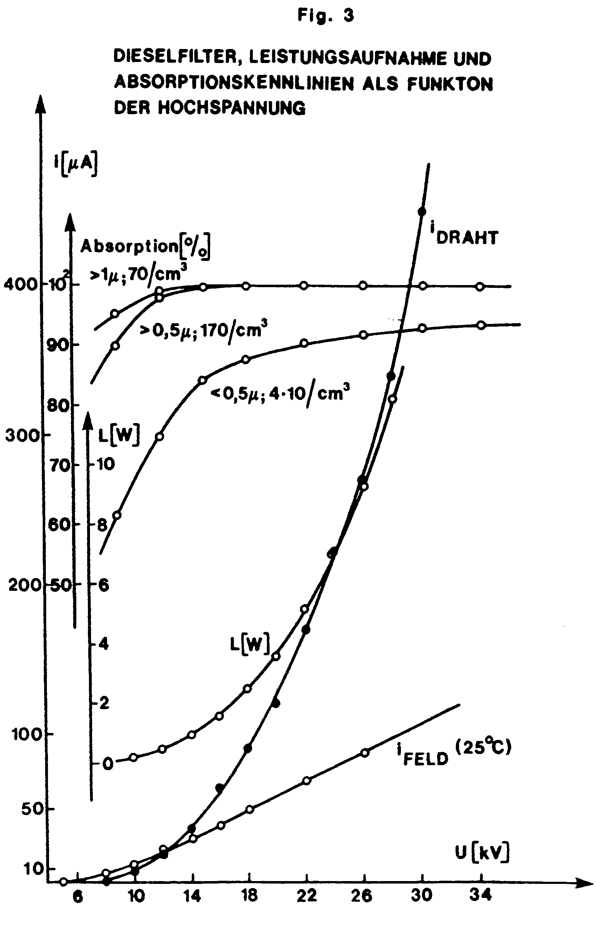

Fig.3 zeigt den in dieser Anordnung bei 25°C fließenden Strom durch die Keramikelemente (i-Feld), den Entladungsstrom am Ionisationsdraht (i-Draht), die von beiden aufgebrachte Leistungsaufnahme L und die gemessenen Absorptionswahrscheinlichkeiten für drei Partikelgrößen: kleiner als 0,5 »m, größer als 0,5 »m und größer als 1 »m. Aufgetragen sind alle diese Größen gegen die unabhängig variierte Größe der gemeinsam am Ionisationsdraht und am Wabenfilter anliegenden Hochspannung U.

Bemerkenswert ist die hohe Absorptionswahrscheinlichkeit für Partikel größer als 0,5 »m mit 90 % bei 4 kV, 99 % bei 12 kV und über 99,9 % bis 34 kV, sodaß sich ein Regelintervall von rund 30 kV für die ohmsche Heizung am Filter anbietet.

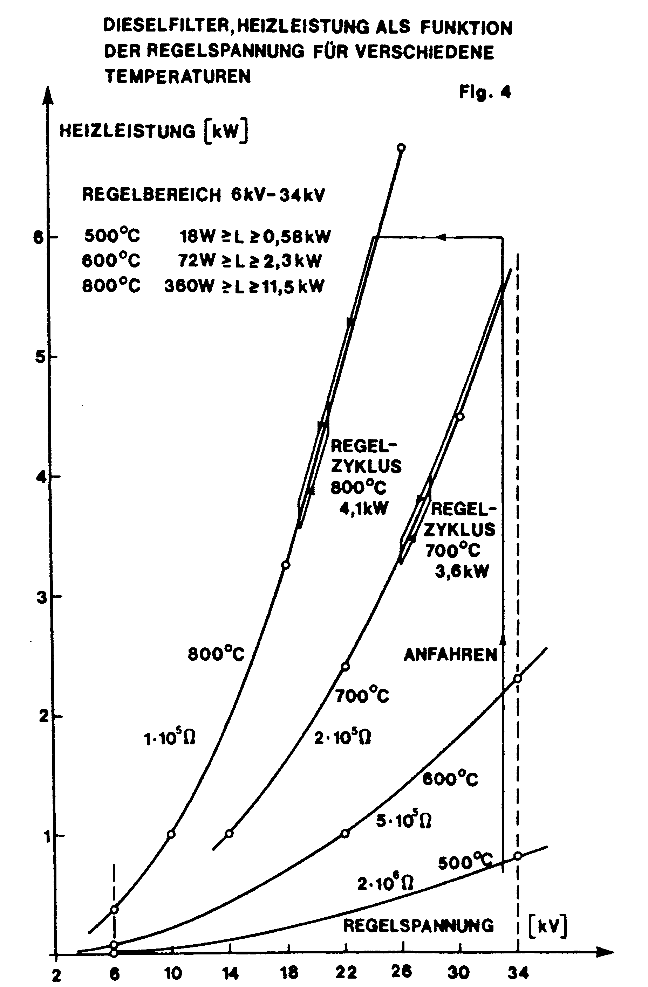

Fig. 4 zeigt die Leistungsaufnahme der Filterelemente bei Temperaturen zwischen 500°C und 800°C in Abhängigkeit der anliegenden Abscheide- und Regelspannung U. Bemerkenswert ist das für 800°C zur Verfügung stehende Regelintervall von 360 W bei 6 kV bis 11,5 kW bei 34 kV unter voller Aufrechterhaltung der elektrostatischen Abscheidung der Rußpartikel. Eingezeichnet ist ferner ein Regelzyklus bei 700°C bei dem der Filter 3,6 kW abzüglich der Wärmeverluste in das Abgas einkoppelt und ein Regelzyklus bei 800°C bei dem der Filter zusätzlich zu der durch die Verbrennung der Kohlepartikel freiwerdende Wärme 4,1 kW abzüglich der Wärmeverluste an das Abgas abgibt. Für den Anfahrzyklus über 800°C ist eine Leistungsbegrenzung der Hochspannungsquelle bei 6 kW angenommen.

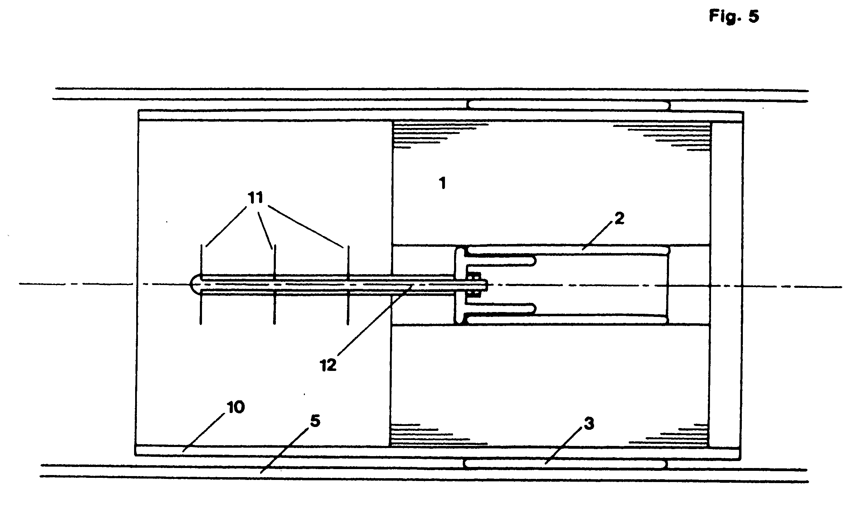

Fig. 5 zeigt den Längsschnitt durch eine kreisringzylinderförmige Anordnung des Wabenfilters 1 mit der innenliegenden zylinderförmigen Hochspannungselektrode 2, die gleichzeitig scheibenförmige Sprühelektroden 11 über einen einsetzbaren Sprühelektrodenhalter 12 trägt. Die zylinderförmige Außenelektrode 3 ist von dem Wabenfilter 1 durch einen Schirmzylinder 10 aus Keramik getrennt, der über die Sprühscheiben 11 vorgezogen ist, um ein zu starkes Abfließen der geladenen Rußpartikel zu dem geerdeten Außengehäuse 5 zu verhindern und gleichzeitig eine gewisse Wärmeisolation sicherzustellen.

## Patentansprüche

1. Dieselabgasfilter zur Ablagerung von Rußpartikeln aus Dieselabgasen auf Ablageflächen und Verbrennung der abgelagerten Rußpartikel, wobei zum Aufbau eines elektrischen Feldes quer zur Strömungsrichtung der Abgase Hochspannungselektroden angeordnet sind, **dadurch gekennzeichnet**, daß der Filter einen aufheizbaren Keramikkörper (1) aus einem Material mit hohem spezifischen elektrischen Widerstand aufweist, daß der Keramikkörper (1) von parallel zueinander verlaufenden Kanälen durchsetzt ist, die an beiden Seiten offen sind und von den Abgasen durchströmt sind und daß die Wände dieser Kanäle die Ablageflächen für die Rußpartikel bilden, wobei dem Keramikkörper (1) unter Ausnutzung der geringen elektrischen Leitfähigkeit durch die an den Hochspannungselektroden (2, 3, 12, 13, 14) angelegte Spannung ohm'sche Wärme zugeführt wird.

2. Dieselabgasfilter nach Anspruch 1, dadurch gekennzeichnet, daß der Keramikkörper (1) zwischen zueinander parallelen Plattenelektroden (14) angeordnet ist und zwischen diesen Plattenelektroden (14) eine entsprechend hohe elektrische Spannung liegt, wobei die Elektroden von dem Keramikmaterial des Keramikkörpers (1) umhüllt sind oder aus leitfähigem keramischen Material bestehen oder durch elektrisch leitende Drähte, Bänder oder Stifte gebildet sind, die in einige am Rand des Keramikkörpers (1) befindliche Kanäle eingeschoben sind, wobei jene Kanäle, in denen elektrisch leitende Drähte, Bänder oder Stifte eingeschoben sind, einseitig verschlossen sind.

3. Dieselabgasfilter nach Anspruch 1 oder 2, **dadurch gekennzeichnet**, daß die Hochspannungselektrode (2) kreisförmig oder ellipsenförmig in sich geschlossen ist und außen von einem entsprechend geformten, im wesentlichen kreisringförmigen Keramikörper umgeben ist, der von einer außen angeordneten auf Masse liegenden zweiten Elektrode (3), die gegebenenfalls mit einer Wärmedämmung umhüllt ist, umgeben ist.

4. Dieselabgasfilter nach Anspruch 3, **dadurch gekennzeichnet**, daß die im wesentlichen rechteckige Querschnittsform eines jeden Kanals des Keramikkörpers (1) quer zum elektrischen Feld und quer zur Strömungsrichtung eine Breite aufweist, die größer ist, als die quer zur Strömungrichtung und in Richtung des elektrischen Feldes verlaufende Höhe des Kanals, wobei das Verhältnis der Breite zur Höhe der einzelnen Kanäle zwischen 3:1 und 6:1 liegt und die in Richtung des elektrischen Feldes bzw. in Abscheiderichtung verlaufenden Stege schmal ausgebildet sind und eine Breite von weniger als 0,5mm aufweisen.

5. Dieselabgasfilter nach einem der Ansprüche 1 bis 4, **dadurch gekennzeichnet**, daß die in Feldrichtung liegenden Stege in übereinanderliegenden Ebenen jeweils versetzt angeordnet sind, so daß der Querschnitt durch den Keramikkörper (1) normal zur Strömungsrichtung der Abgase der Struktur einer Ziegelmauer ähnlich sieht.

6. Dieselabgasfilter nach einem der Ansprüche 1 bis 5, **dadurch gekennzeichnet**, daß dem Keramikkörper (1) eine Entladungsstrecke vorgeschaltet ist, die aus, vorzugsweise parallel zueinander liegenden drahtförmigen Entladungselektroden (12) und stromauf zu diesen liegenden zylinderförmigen Gegenelektroden (13) oder Gegenelektroden besteht, deren den drahtförmigen Entladungselektroden (12) gegenüberliegende Kanten parallel zu den Entladungselektroden (12) ausgerichtet sind, wobei die Spannung an dieser Entladungsstrecke regelbar ist.

7. Dieselabgasfilter nach Anspruch 6, **dadurch gekennzeichnet**, daß der Ionisationsstrom der durch die Elektroden (12) und die Gegenelektrodeen (13) gebildeten Entladungsstrecke proportional zu der Einspritzmenge des Dieselkraftstoffes oder einer ihr verwandten Größe geregelt wird.

8. Dieselabgasfilter nach einem der Ansprüche 1 bis 7, **dadurch gekennzeichnet**, daß eine Einrichtung zur Regelung der zugeführten Heizleistung vorgesehen ist, wobei die Regelung in Abhängigkeit von gleichzeitigen Messungen der temperaturabhängigen Strom-Spannungs-Charakteristik des Keramikkörpers in Abscheiderichtung oder von der mittels eines Temperaturfühlers an dem Keramikkörper erfaßten Temperatur erfolgt.

9. Dieselabgasfilter nach einem der Ansprüche 1 bis 7, **dadurch gekennzeichnet**, daß eine Einrichtung zur Regelung der zugeführten Heizleistung vorgesehen ist, wobei die Regelung in Abhängigkeit vom Beladungsgrad des Filters ist, der durch Messung des Durchgangswiderstandes quer zur Abscheiderichtung oder durch Vergleich der Durchgangswiderstände in der Abscheiderichtung und quer dazu bestimmt wird.

## Claims

1. Filter for diesel exhaust gas to deposit soot particles from diesel exhaust gases on deposit surfaces and combust the deposited soot particles, wherein high-voltage electrodes are provided to generate an electric field obliquely to the flow direction of the exhaust gases, characterised in that said filter has a ceramic body (1), which may be heated and is made of a material with high specific electrical resistance, that said ceramic body (1) has parallel ducts running through it, which are open on both sides and through which exhaust gases flow, and that the walls of these ducts form the deposit surfaces for the soot particles, and utilising the low electric conductivity, ohmic heat is fed to said ceramic body (1) through the voltage applied to said high-voltage electrodes (2, 3, 12, 13, 14).

2. Filter for diesel exhaust gas according to Claim 1, characterised in that the ceramic body (1) is disposed between parallel plate electrodes (14) and there is a correspondingly high electric voltage between these plate electrodes (14), wherein said electrodes are enveloped by the ceramic material of said ceramic body (1) or are made of conductive ceramic material or are formed by electrically conductive wires, strips or pins, which are inserted into several ducts located on the edge of said ceramic body (1), and these ducts, into which electrically conductive wires, strips or pins are inserted, are sealed on one side.

3. Filter for diesel exhaust gas according to Claim 1 or 2, characterised in that the high-voltage electrode (2) is closed upon itself in the shape of a circle or an ellipse and is enclosed on the outside by a correspondingly shaped, essentially circular ceramic body enclosed by a second earthed electrode (3), which is arranged on the outside and is optionally enveloped by a thermal insulation.

4. Filter for diesel exhaust gas according to Claim 3, characterised in that the width of the essentially rectangular cross-sectional form of each duct of the ceramic body (1) obliquely to the electric field and obliquely to the flow direction is greater than the height of the duct running obliquely to the flow direction and in the direction of the electric field, in which case the ratio of the width to the height of the individual ducts is between 3:1 and 6:1, and the webs extending towards the electric field or in collector direction are narrow and have a width of less than 0.5 mm.

5. Filter for diesel exhaust gas according to one of Claims 1 to 4, characterised in that webs lying in field direction are each staggered in superposed planes so that the cross-section through the ceramic body (1) normal to the flow direction of the exhaust gases has a similar structure to that of a brick wall.

6. Filter for diesel exhaust gas according to one of Claims 1 to 5, characterised in that upstream of the ceramic body (1) a discharge area is provided, which preferably comprises parallel wire-type discharge electrodes (12) and, located upstream of this, cylindrical counter-electrodes (13) or counter-electrodes, in which the edges opposite said wire-type discharge electrodes (12) are aligned parallel to said discharge electrodes (12), the voltage in this discharge area being adjustable.

7. Filter for diesel exhaust gas according to Claim 6, characterised in that the ionisation flow of the discharge area formed by the electrodes (12) and the counter-electrodes (13) is adjusted proportionally to the quantity of diesel fuel injected or to a magnitude related thereto.

8. Filter for diesel exhaust gas according to one of Claims 1 to 7, characterised in that a means for regulating the heating power supplied is provided, wherein the regulation is carried out on the basis of simultaneous measurements of the temperature-dependent current voltage characteristic of the ceramic body in collector direction, or on the basis of the temperature detected on the ceramic body by a temperature sensor.

9. Filter for diesel exhaust gas according to one of Claims 1 to 8, characterised in that a means for regulating the heating power supplied is provided, wherein the regulation is carried out on the basis of the loading of the filter, which is determined by measurement or the volume resistance obliquely to the collector direction, or by comparison of the volume resistances in collector direction and obliquely thereto.

## Revendications

1. Filtre de gaz d'échappement de diesel pour le dépôt de particules de suie provenant des gaz d'échappement de diesel sur des surfaces de dépôt et la combustion des particules de suie déposées, dans lequel des électrodes à haute tension sont prévues, pour l'établissement d'un champ électrique, transversalement par rapport à la direction de circulation des gaz d'échappement, caractérisé en ce que le filtre possède un corps céramique (1) pouvant être chauffé, réalisé en un matériau possédant une résistance électrique spécifique élevée, que le corps céramique (1) est traversé par des canaux parallèles, qui sont ouverts des deux côtés et sont parcourus par les gaz d'échappement, et que les parois des canaux forment des surfaces de dépôt pour les particules de suie, une chaleur produite par effet Joule étant appliquée au corps céramique (1) sous l'effet de la tension appliquée aux électrodes à haute tension (2, 3, 12, 13, 14), moyennant l'utilisation de la faible conductivité électrique.

2. Filtre de gaz d'échappement de diesel selon la revendication 1, caractérisé en ce que le corps céramique (1) est disposé entre des électrodes en forme de plaques parallèles (14) et qu'une tension électrique élevée correspondante est appliquée entre ces électrodes en forme de plaques (14), les électrodes étant remplies par le matériau céramique du corps céramique (1) ou bien sont réalisées en un matériau céramique conducteur ou sont constituées par des fils, des bandes ou des tiges électriquement conducteurs, qui sont insérés dans quelques canaux situés sur le bord du corps céramique (1), auquel cas les canaux, dans lesquels sont insérés les fils, bandes ou tiges électriquement conducteurs, sont fermés d'un côté.

3. Filtre de gaz d'échappement de diesel suivant la revendication 1 ou 2, caractérisé en ce que l'électrode à haute tension (2) est refermée sur elle-même avec une forme circulaire ou elliptique et est entourée extérieurement par un corps céramique de forme correspondante, essentiellement en forme d'anneau circulaire et qui est entouré par une seconde électrode (3), qui est disposée à l'extérieur, est raccordée à la masse et est éventuellement entourée par un calorifugeage.

4. Filtre de gaz d'échappement de diesel selon la revendication 3, caractérisé en ce que la forme en coupe transversale essentiellement rectangulaire de chaque canal du corps céramique (1) possède, transversalement par rapport au champ électrique et transversalement par rapport à la direction d'écoulement, une largeur qui est supérieure à la hauteur du canal, qui s'étend transversalement par rapport à la direction d'écoulement ou dans la direction du champ électrique, le rapport de la largeur à la hauteur des différents canaux étant compris entre 3:1 et 6:1, alors que les barrettes qui s'étendent dans la direction du champ électrique ou dans la direction de séparation sont réalisées avec une forme étroite et possèdent une largeur inférieure à 0,5 mm.

5. Filtre de gaz d'échappement de diesel selon l'une des revendications 1 à 4, caractérisé en ce que les barrettes, qui sont situées dans la direction du champ, sont disposées en étant réciproquement décalées dans des plans superposés de sorte que la section transversale du corps céramique (1) perpendiculairement à la direction d'écoulement des gaz d'échappement ressemble à la structure d'un mur en briques.

6. Filtre de gaz d'échappement de diesel selon l'une des revendications 1 à 5, caractérisé en ce qu'en amont du corps céramique (1) est disposée une section de décharge, qui est constituée par des électrodes de décharge (12) en forme de fils, de préférence parallèles et par des contre-électrodes cylindriques (13) situées en amont des précédentes ou des contre-électrodes, dont les bords, qui sont situés en vis-à-vis des électrodes de décharge en forme de fils (12), sont parallèles aux électrodes de décharge (12), auquel cas la tension dans cette section de décharge est réglable.

7. Filtre de gaz d'échappement de diesel selon la revendication 6, caractérisé en ce que le courant d'ionisation de la section de décharge formée par les électrodes (12) et par les contre-électrodes (13) est réglé proportionnellement à la quantité d'injection du carburant diesel ou est réglé sur une valeur utilisée pour ce carburant.

8. Filtre de gaz d'échappement de diesel selon l'une des revendications 1 à 7, caractérisé en ce qu'il est prévu un dispositif pour régler la puissance de chauffage appliquée, la régulation s'effectuant en fonction de mesures simultanées de la caractéristique courant-tension, qui dépend de la température, du corps céramique dans la direction de séparation ou bien de la température détectée au moyen d'un capteur de température sur le corps céramique.

9. Filtre de gaz d'échappement de diesel selon l'une des revendications 1 à 7, caractérisé en ce qu'il est prévu un dispositif pour régler la puissance de chauffage appliquée, la régulation s'effectuant en fonction du degré de charge du filtre, qui est déterminé par la mesure de la résistance de traversée par rapport à la direction de dépôt ou par comparaison des valeurs de traversée dans la direction de dépôt et dans une direction transversale à la précédente.
